# EUROPÄISCHE PATENTSCHRIFT

(11) **EP 3 356 444 B1**
(45) Veröffentlichungstag und Bekanntmachung des Hinweises auf die Patenterteilung: **26.08.2020**
(21) Anmeldenummer: 16775665.9
(22) Anmeldetag: 29.09.2016
(51) Int. Cl.: C08G 18/80, C09D 5/16, C09D 183/06, C08G 77/388, C08G 18/71, C09D 175/04, C08G 18/32

(54) **MIT SILIKONHARZEN MODIFIZIERTE ISOCYANATOALKYLALKOXYSILAN-ADDUKTE UND IHRE VERWENDUNG**
ISOCYANATE ALKYLALKOXYSILANE ADDUCTS MODIFIED WITH SILICONE INTERMEDIATES AND THEIR USE
ADDITIFS D'ISOCYANATOALKYLALKOSILANE MODIFIES PAR DES INTERMEDIAIRES DE SILICIUM ET LEUR UTILISATION

(30) Priorität: 30.09.2015 EP 15187571
(43) Veröffentlichungstag der Anmeldung: 08.08.2018
(73) Patentinhaber: Evonik Operations GmbH, 45128 Essen (DE)
(72) Erfinder: STACHE, Wiebke, 45699 Herten (DE); HALLACK, Markus, 46514 Schermbeck (DE); LILIENTHAL, Annegret, 46282 Dorsten (DE); BALLAUF, Sina, 47167 Duisburg (DE); BAUER, Tina, 45894 Gelsenkirchen (DE); KLAWIKOWSKI, Ralf, 45665 Recklinghausen (DE); KLOTZBACH, Thomas, 63500 Seligenstadt (DE)
(74) Vertreter: Evonik Patent Association
(86) Internationale Anmeldenummer: PCT/EP2016/073218
(87) Internationale Veröffentlichungsnummer: WO 2017/055418

(56) Entgegenhaltungen:
- EP-A1- 2 518 095

## Beschreibung

Die vorliegende Erfindung betrifft Bindemittel auf Basis von Reaktionsprodukten von Alkoxysilan-haltigen Silikonharzen (Silikonintermediaten) und Isocyanatoalkylalkoxysilan-Addukten, Verfahren zu ihrer Herstellung und ihre Verwendung, insbesondere zum Einsatz in Formulierungen für Lack-, Klebstoff- und Dichtstoffanwendungen.

Polyurethane haben sich seit vielen Jahrzehnten als hochwertige Bausteine für Lack-, Klebstoff-, Dichtstoff- und Kunststoffsysteme erwiesen. Dabei können zusätzliche Alkoxysilangruppen hier eine wichtige Rolle z. B. in Hinblick auf Netzwerkdichte, Chemikalienbeständigkeit und Kratzfestigkeit spielen, in erste Linie durch die Ausbildung von Siloxan- und Polysiloxanstrukturen. Moleküle, die sowohl über Alkoxysilangruppen verfügen, als auch Isocyanatgruppen aufweisen, bieten die Möglichkeit, die als Reaktionsprodukte resultierende Funktionalitäten, Siloxane und Polyurethangruppen, durch eine Komponente einzufügen. Auch solche Substanzen sind schon lange in Gebrauch, z. B. in Form von Isocyanatoalkyltrialkoxysilanen. Die genannten Systeme sind in der Regel mit einer Vielzahl an organischen Polymeren, die üblicherweise in Lack-, Klebstoff- und Dichtstoffanwendungen eingesetzt werden, kompatibel. Allerdings zeigen sie vielfach eine nicht optimale Performance bezüglich der Wetterbeständigkeit, beispielsweise nach jahrelanger Bewitterung z. B. in Florida/USA. Organische Lacke, z. B. Polyurethanbeschichtungen zeigen unter diesen Bewitterungsbedingungen oft schon nach wenigen Monaten einen deutlichen Glanzabfall. Ebenfalls werden im Bereich der Lack-, Klebstoff- und Dichtstoffanwendungen seit langem Silikonharze als Bindemittel verwendet, die aufgrund vorhandener reaktiver Alkoxysilylgruppen mittels eines Hydrolyse- und Kondensationsmechanismus zur Aushärtung gebracht werden können. Dies geschieht in der Regel mit Katalysatoren, die den Hydrolyse- und/oder Kondensationsprozess der härtbaren Gruppen fördern. Die Herstellung von derartigen Silikonharzen ist der Literatur lange bekannt und wird z. B. auch in der deutschen Patentschrift DE 34 12 648 beschrieben. Vorteilhaft an Silikonharzen ist ihre hohe Wetterbeständigkeit. So verlieren silikonhaltige Beschichtungen auch nach jahrelanger Bewitterung wenig an Glanz. EP 2 518 095 A1 offenbart die Herstellung eines Bindemittels für antifouling Beschichtungen, durch Darstellung eines Addukts eines Polyols auf Pflanzenölbasis mit Isocyanatopropyltriethoxysilan im ersten Reaktionsschritt, gefolgt von der Umsetzung des Addukts mit einem silanolfunktionalen PDMS im zweiten Schritt, unter Verwendung von Dibutylzinndilaurat und p-Toluolsulfonsäure als Katalysatoren.

Nachteilig an den vorab genannten Silikonharzen ist aber die schlechte Verträglichkeit mit anderen organischen Polymeren, die üblicherweise in Lack-, Klebstoff- und Dichtstoffanwendungen eingesetzt werden. So sind Methylsilikonharze mit nahezu allen organischen Bindemittelsystemen unverträglich. Die schlechte Verträglichkeit der genannten Komponenten basiert auf der starken Hydrophobie der Silikonharze und äußert sich z. B. darin, dass beim Mischen trübe Lösungen erhalten werden.

Es gibt daher einen Bedarf für neuartige Bindemittel, die die Nachteile des Standes der Technik überwinden.

Aufgabe dieser Erfindung war es, neue Bindemittel zugänglich zu machen, die mit anderen organischen Formulierungsbestandteilen verträglich sind und für den Einsatz in Lack-, Klebstoff- oder Dichtstoffanwendungen für Innen- und Außenanwendungen geeignet sind.

Diese Aufgabe wird durch Bindemittel gemäß der vorliegenden Erfindung gelöst. Ein erster Gegenstand der vorliegenden Erfindung sind Bindemittel auf Basis eines Reaktionsproduktes aus einem Addukt (A) von einem Isocyanatoalkylalkoxysilan (A1) und einem Alkohol (A2), mit einem Alkoxysilan-haltigen, Q-Einheit-freien Alkyl- und/oder Aryl-Silikonharz (B) (Silikonintermediat).

Überraschenderweise wurde gefunden, dass das erfindungsgemäße Reaktionsprodukt gut verträglich mit organischen Bindemitteln ist und für die Anwendung als Lack-, Klebstoff- oder Dichtstoffbindemittel oder Bindemittelkomponente geeignet ist. Darüber hinaus führen die erfindungsgemäßen Bindemittel zu Beschichtungen mit einer verbesserten Bewitterungsstabilität, was für den Fachmann so nicht zu erwarten war.

Wesentlich im Rahmen der vorliegenden Erfindung ist das Umsetzungsprodukt aus einem Addukt (A) basierend auf einem Isocyanatoalkylalkoxysilan (A1) und einem Alkohol (A2), mit einem Alkoxysilan-haltigen, Q-Einheit-freien Alkyl- und/oder Aryl-Silikonharz (B) (Silikonintermediat), das heißt das Addukt (A) und das Silikonharz (B) (Silikonintermediat) liegen in dem erfindungsgemäßen Bindemittel chemisch miteinander verbunden vor.

Die erfindungsgemäß eingesetzten Addukte (A) werden nach dem Stand der Technik durch Umsetzung von einem Isocyanatoalkylalkoxysilan (A1) mit Alkoholen (A2) erhalten.

Bevorzugt ist das Isocyanatoalkylalkoxysilan (A1) ausgewählt aus der Gruppe umfassend Isocyanatomethyltrimethoxysilan, Isocyanatomethyltriethoxysilan, Isocyanatomethyltri-iso-propoxysilan, 2-Isocyanatoethyltrimethoxysilan, 2-Isocyanatoethyltriethoxysilan, 2-Isocyanatoethyltri-iso-propoxysilan, 3-Isocyanato-n-propyltrimethoxysilan, 3-Isocyanato-n-propyltriethoxysilan, 3-Isocyanato-n-propyltri-iso-propoxysilan, 4-Isocyanato-n-butyltrimethoxysilan, 4-Isocyanato-n-butyltriethoxysilan und 4-Isocyanato-n-butyltri-iso-propoxysilan. Erfindungsgemäß können ein oder mehrere Isocyanatoalkoxysilane (A1) eingesetzt werden. Bevorzugt wird nur ein Isocyanatoalkoxysilan eingesetzt. Ganz bevorzugt, weil dies zu besonders guten Ergebnissen führt, ist das Isocyanatoalkoxysilan (A1) 3-Isocyanato-n-propyltrimethoxysilan.

Erfindungsgemäß können weiterhin ein oder mehrere Alkohole (A2) eingesetzt werden. Bevorzugt wird nur ein Alkohol (A2) eingesetzt. Als Alkohole (A2) werden im Rahmen der vorliegenden Erfindung bevorzugt ein- und mehrwertige Alkohole eingesetzt.

Als einwertige Alkohole können lineare oder verzweigte Alkohole, deren Hydroxyfunktion an einem primären, sekundären oder tertiären Kohlenstoffatom hängt, eingesetzt werden.

Bevorzugt werden jedoch mehrwertige Alkohole eingesetzt. Unter dem Begriff "mehrwertiger Alkohol", wie hierin verwendet, wird eine organische Verbindung mit wenigstens zwei Hydroxygruppen verstanden, die bevorzugt jeweils kovalent an jeweils ein Kohlenstoffatom gebunden sind. Insbesondere eignen sich aliphatische verzweigte Diole oder Polyole. Es können auch Mischungen verschiedener mehrwertiger Alkohole zur Herstellung des Adduktes (A) verwendet werden.

In einer bevorzugten Ausführungsform ist der mehrwertige Alkohol aus der Gruppe ausgewählt, die Ethylenglycol, 1,2-Propandiol, 1,3-Propandiol, 1,4-Butandiol, 1,5- Pentandiol, 1,6-Hexandiol, 1,10-Decandiol, 1,12-Dodecandiol, Glycerin, Isosorbit, Isomannit, Isoidit, 2,2,4-Trimethylhexandiol-1,6 und 2,4,4-Trimethylhexandiol-1,6 allein oder als beliebige Gemische dieser Isomeren, 2,2-Dimethyl-butandiol-1,3, 2-Methyl-pentandiol-2,4, 3-Methyl-pentandiol-2,4, 2,2,4-Trimethy-1-pentandiol-1,3, 2-Ethylhexandiol-1,3, 2,2-Dimethylhexandiol-1,3, 3-Methylpentandiol-1,5, 2-Methylpentandiol-1,5, 2,2-Dimethylpropandiol-1,3 (Neopentylglykol), Hydroxypivalinsäureneopentylglykolester, Polyethylenglykol, Polypropylenglykol, Sorbit, Pentaerythrit, 1,1,1-Trimethylolpropan, 3(4),8(9)-Bis(hydroxymethyl)-tricyclo[5.2.1.02,6]decan (Dicidol) und/oder 2,2-Bis-(4-hydroxycyclohexyl)propan umfasst. Besonders bevorzugt sind 1,1,1-Trimethylolpropan, 3-Methylpentandiol-1,5, Neopentylglykol, 2,2,4-Trimethylhexandiol-1,6 und 2,4,4-Trimethylhexandiol-1,6, allein oder als beliebige Gemische dieser Isomeren und/oder als Hydroxypivalinsäureneopentylglykolester eingesetzt. Die genannten Verbindungen können dabei jeweils allein oder in Form ihrer Mischungen eingesetzt werden. In einer besonders bevorzugten Ausführungsform, die zu besonders guten Ergebnissen führt, wird 2,2,4-Trimethylhexandiol-1,6 und/oder 2,4,4-Trimethylhexandiol-1,6 eingesetzt. Die beiden Isomere können somit allein oder als Mischung in einem beliebigen Verhältnis eingesetzt werden.

Als mehrwertige Alkohole sind zur Herstellung des Adduktes (A) ferner oligomere Diole wie z. B. Polypropylenglykole, Polybutylenglykole, Diethylen-, Dipropylen-, Triethylen-, Tetraethylenglykol geeignet. Als polyfunktionelle Diole mit n>2 sind Glycerin, Hexandiol, Hexantriol-1,2,6, Butantriol-1,2,4, Tris-(β-hydroxyethyl)isocyanurat, Mannit oder Sorbit, geeignet. Diese Komponenten können ebenfalls allein oder als Mischungen verwendet werden.

Weiterhin sind als mehrwertige Alkohole zur Herstellung des Adduktes (A) unter anderem z. B. hydroxylgruppenhaltige Polymere wie Polyester, Polyether, Polyacrylate, Polycarbonate, Polyolefine und Polyurethane geeignet. Bevorzugt sind hydroxylgruppenhaltige Polymere mit einer OH-Zahl von 20 bis 500 mg KOH/Gramm und einer mittleren Molmasse von 250 bis 6000 g/Mol als zusätzliche mehrwertige Alkohole geeignet. Besonders bevorzugt sind hydroxylgruppenhaltige Polyester und/oder Polyacrylate mit einer OH-Zahl von 20 bis 150 mg KOH/Gramm und einem mittleren Molekulargewicht von 500 bis 6000 g/mol. Die Hydroxylzahl (OHZ) wird nach DIN 53240-2 bestimmt. Darüber hinaus können auch Mischungen der oben genannten Polymere oder Mischungen mit monomeren oder oligomeren Di- oder Polyolen als zusätzliche Polyole eingesetzt werden.

Die Umsetzung des mehrwertigen Alkohols mit den Isocyanatoalkylalkoxysilanen zur Bildung der Addukte (A) erfolgt weiterhin bevorzugt derart, dass das molare Verhältnis von OH-Gruppen der Alkohole (A2) zu NCO-Gruppen der Isocyanatoalkyltrialkoxysilane (A1) bevorzugt 0,8:1 bis 1,2:1, weiter bevorzugt 0,9:1 bis 1,1:1, beträgt. Ganz besonders bevorzugt ist die stöchiometrische Umsetzung. Somit erfolgt insbesondere ganz besonders bevorzugt eine vollständige Umsetzung aller OH-Gruppen der Diole mit den NCO-Gruppen der Verbindungen der Isocyanatoalkyltrialkoxysilane.

Bei der genannten Umsetzung reagieren die NCO-Gruppen der Isocyanatoalkylalkoxysilane mit den OH-Gruppen der Diole unter Ausbildung von -NH-CO-O-Gruppen (Urethan), die diese Verbindungen miteinander verknüpfen.

Bevorzugt handelt es sich bei dem Addukt (A) um ein Addukt von einem Isocyanatoalkylalkoxysilan und mehrwertigen Alkoholen, wobei mehr als 90, bevorzugt mehr als 95, besonders bevorzugt mehr als 99 Prozent der Hydroxygruppen des ein- oder mehrwertigen Alkohols durch Reaktion mit dem Isocyanatoalkylalkoxysilan umgesetzt sind und der Rest-NCO-Gehalt weniger als 0.1 Gew-% beträgt.
Dem Fachmann sind aus dem Stand der Technik und als Teil seines Fachwissens Verfahren bekannt, mit denen die Zahl der reaktiven NCO-Gruppen bestimmt werden kann.

Die Herstellung der erfindungsgemäß eingesetzten Addukte (A) erfolgt im Allgemeinen lösungsmittelfrei oder unter Verwendung von nicht-protischen Lösemitteln, wobei die Umsetzung diskontinuierlich oder kontinuierlich erfolgen kann. Bevorzugte Lösemittel sind Ethylacetat, Butylacetat, Ethylenglykolmonomethyletheracetat, Ethylenglykolmonoethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten (wie sie beispielsweise unter den Bezeichnungen Solventnaphtha, Solvesso®, Isopar® und Nappar® der Deutsche EXXON CHEMICAL GmbH bzw. als Shellsol® der Deutsche Shell Chemie GmbH im Handel sind), Kohlensäureester (insbesondere Dimethylcarbonat, Diethylcarbonat, 1,2-Ethylencarbonat und 1,2-Propylencarbonat), Lactone (insbesondere Propiolacton, Butyrolacton, Caprolacton und Methylcaprolacton), Propylenglykoldiacetat, Diethylenglykoldimethylether, Dipropylenglykoldimethylether, Diethylenglykolethyletheracetat, Diethylenglykolbutyletheracetat, N-Methylpyrrolidon und N-Methylcaprolactam. Die vorgenannten Lösemittel können alleine in beliebigen Gemischen eingesetzt werden. Besonders bevorzugt wird Butylacetat eingesetzt. Die Reaktion wird bevorzugt unter Ausschluss von Wasser durchgeführt.

Die Reaktion kann bei Raumtemperatur, das heißt bei Temperaturen im Bereich von 20 bis 25 °C, geführt werden, bevorzugt werden jedoch höhere Temperaturen im Bereich 30 bis 150 °C, insbesondere im Bereich von 40 bis 100 °C verwendet. Zur Beschleunigung der Reaktion können vorteilhaft in der Urethanchemie bekannte Katalysatoren wie beispielsweise Sn-, Bi-, Zn- und andere Organometall-Verbindungen, aber auch tert.-Amine wie beispielsweise 1,4-Diazabicyclo[2.2.2]octan (DABCO), Triethylamin etc. eingesetzt werden.

Das erzeugte Addukt (A) wird nachfolgend mit einem Alkoxysilan-haltigen, Alkyl- und/oder Aryl-Silikonharz ohne Q-Einheiten (B) zu dem erfindungsgemäßen Reaktionsprodukt umgesetzt. Silikonharze, die auch als Silikone bezeichnet werden können, können mono-, di-, tri- und/oder tetrafunktionelle Siloxaneinheiten aufweisen. Entsprechende Einheiten werden auch mit den Kürzeln M, D, T und Q versehen. Das erfindungsgemäß einzusetzende Silikonharz weist keine Q-Einheiten auf, d.h. es verfügt über keine tetrafunktionellen Siloxaneinheiten und somit über keine Siloxaneinheiten mit vier an das Siliciumatom gebundenen Sauerstoffatomen, die zur Bildung des Siloxans beitragen oder Teil von Alkoxygruppen sind. Die Silikonharze verfügen somit nur über M-, D- und/oder T-Einheiten. Entsprechend ist das Silikonharz nur mono-, di- und/oder trifunktionell. Entsprechende Siloxanharze führen nicht nur zu einer besonders guten Verträglichkeit in Bindemitteln, sondern auch zu Beschichtungen, die wenig spröde und flexibel sind und eine gute Bewitterungsstabilität aufweisen.

Das Silikonharz ist ein Alkyl- und/oder Aryl-Silikonharz, d.h. es weist direkt an Siliciumatome gebundene Alkyl- und/oder Arylgruppen auf. Da das Silikonharz nur über M-, D- und/oder T-Einheiten verfügt, ist jedes Siliciumatom mit mindestens einem Alkyl- und/oder Arylrest substituiert. Weiterhin verfügt das Silikonharz auch über Alkoxysilan-Gruppen, d.h. es kann eine oder mehrere Alkoxygruppen gebunden an Siliciumatome aufweisen.

Bei den erfindungsgemäß eingesetzten Silikonharz (B) handelt es sich bevorzugt um ein Silikonharz (B) (Silikonintermediat) enthaltend Einheiten der folgenden Formel (I)

R³_{c}(R⁴O)_{d}R⁵ₑSiO_{(4-c-d-e)/2} Formel (I),

wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (I) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3, bevorzugt 0, 1 oder 2, besonders bevorzugt 0 oder 1, ist und
e 0, 1 oder 2, bevorzugt 0 oder 1, ist, mit der Maßgabe, dass die Summe aus c + d + e größer 0 und kleiner oder gleich 3 und weiterhin c + e ≥ 1 ist, und vorzugsweise in mindestens 40 der Einheiten der Formel (I) die Summe c + e gleich 1 ist.

Bevorzugt werden als Komponenten (B) Silikonharze eingesetzt, in denen mindestens 90% aller Reste R³ für Methylrest, mindestens 90% aller Reste R⁴ für Methyl-, Ethyl-, Propyl- oder Isopropylrest und mindestens 90% aller Reste R⁵ für Phenylrest stehen.

Vorzugsweise werden erfindungsgemäß Silikonharze (B) eingesetzt, die mindestens 20%, besonders bevorzugt mindestens 40%, Einheiten der Formel (I) aufweisen, in denen c gleich 0 ist, jeweils bezogen auf die Gesamtzahl an Einheiten der Formel (I).

In einer Ausführung der Erfindung werden Silikonharze (B) eingesetzt, die, jeweils bezogen auf die Gesamtzahl an Einheiten der Formel (I), maximal 20%, besonders bevorzugt maximal 10% Einheiten der Formel (I) aufweisen, in denen c für den Wert 2 steht.

Vorzugsweise werden Silikonharze (B) eingesetzt, die, jeweils bezogen auf die Gesamtzahl an Einheiten der Formel (I), mindestens 80%, besonders bevorzugt mindestens 95%, Einheiten der Formel (I) aufweisen, in denen d für den Wert 0 oder 1 steht.

Vorzugsweise werden Silikonharze (B) eingesetzt, die, jeweils bezogen auf die Gesamtzahl an Einheiten der Formel (I), mindestens 5%, besonders bevorzugt mindestens 10%, und höchstens 40%, besonders bevorzugt höchstens 30%, Einheiten der Formel (I) aufweisen, in denen d für den Wert 0 steht.

Bevorzugt werden als Komponenten (B) Silikonharze eingesetzt, die, jeweils bezogen auf die Gesamtzahl an Einheiten der Formel (I), mindestens 1%, bevorzugt mindestens 10%, insbesondere mindestens 20% Einheiten der Formel (I) aufweisen, in denen e für einen Wert ungleich 0 steht.

Vorzugsweise werden Silikonharze (B) eingesetzt, die, jeweils bezogen auf die Gesamtzahl an Einheiten der Formel (I), mindestens 20%, besonders bevorzugt mindestens 40%, Einheiten der Formel (I) aufweisen, in denen e für den Wert 1 steht.

Vorzugsweise werden Silikonharze (B) eingesetzt, die, jeweils bezogen auf die Gesamtzahl an Einheiten der Formel (I), mindestens 50% Einheiten der Formel (I) aufweisen, in denen die Summe c + e gleich 1 ist.

In einer besonders bevorzugten Ausführung der Erfindung werden als Komponente (B) Silikonharze eingesetzt, die, jeweils bezogen auf die Gesamtzahl an Einheiten der Formel (I), mindestens 20%, besonders bevorzugt mindestens 40%, Einheiten der Formel (I) aufweisen, in denen e für den Wert 1 und c für den Wert 0 steht. Vorzugsweise weisen dabei höchstens 70%, besonders bevorzugt höchstens 40% aller Einheiten der Formel (I) ein d ungleich 0 auf.

In einer weiteren besonders bevorzugten Ausführung der Erfindung werden als Komponente (B) Silikonharze eingesetzt, die, jeweils bezogen auf die Gesamtzahl an Einheiten der Formel (I), mindestens 20%, besonders bevorzugt mindestens 40%, Einheiten der Formel (I) aufweisen, in denen e für den Wert 1 und c für den Wert 0 steht und die zudem mindestens 1 %, bevorzugt mindestens 10%, an Einheiten der Formel (I) aufweisen, in denen c für 1 oder 2, und e für 0 steht

Beispiele für die erfindungsgemäß eingesetzten Silikonharze (B) sind Organopolysiloxanintermediate/Silikonharze, die im Wesentlichen, vorzugsweise ausschließlich, aus (T)-Einheiten der Formeln PhSiO_{3/2}, PhSi(OR⁴)O_{2/2} und PhSi(OR⁴)₂O_{1/2}, (D)-Einheiten der Formeln Me₂SiO_{2/2} und Me₂Si(OR⁴)O_{1/2} sowie (M)-Einheiten der Formel Me₃SiO_{1/2} bestehen, wobei Me für einen Methylrest, Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten bevorzugt 0-2 Mol (D)-Einheiten und 0-2 Mol (M)-Einheiten enthält.

Bevorzugte Beispiele für die erfindungsgemäß eingesetzten Silikonharze (B) sind Organopolysiloxanintermediate/Silikonharze, die im Wesentlichen, vorzugsweise ausschließlich, aus T-Einheiten der Formeln PhSiO_{3/2}, PhSi(OR⁴)O_{2/2} und PhSi(OR⁴)₂O_{1/2} sowie D-Einheiten der Formeln Me₂SiO_{2/2} und Me₂Si(OR⁴)O_{1/2} bestehen, wobei Me für einen Methylrest, Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von (T)- zu (D)-Einheiten von 0,5 bis 2,0.

Weitere bevorzugte Beispiele für die erfindungsgemäß eingesetzten Silikonharze (B) sind Organopolysiloxanintermediate/Silikonharze, die im Wesentlichen, vorzugsweise ausschließlich, aus T-Einheiten der Formeln PhSiO_{3/2}, PhSi(OR⁴)O_{2/2} und PhSi(OR⁴)₂O_{1/2} sowie T-Einheiten der Formeln MeSiO_{3/2}, MeSi(OR⁴)O_{2/2} und MeSi(OR⁴)₂O_{1/2} sowie gegebenenfalls D-Einheiten der Formeln Me₂SiO_{2/2} und Me₂Si(OR⁴)O_{1/2} bestehen, wobei Me für einen Methylrest, Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von Phenylsilikon- zu Methylsilikon-Einheiten von 0,5 bis 4,0. Der Gehalt an D-Einheiten in diesen Silikonharzen liegt vorzugsweise unter 10 Gew.-%.

Zusätzliche bevorzugte Beispiele für die erfindungsgemäß eingesetzten Silikonharze (B) sind Organopolysiloxanintermediate/Silikonharze, die im Wesentlichen, vorzugsweise ausschließlich, aus T-Einheiten der Formeln PhSiO_{3/2}, PhSi(OR⁴)O_{2/2} und PhSi(OR⁴)₂O_{1/2} bestehen, wobei Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht. Der Gehalt an D-Einheiten in diesen Silikonharzen liegt vorzugsweise unter 10 Gew.-%.

Ebenfalls bevorzugt genügen die Silikonharze der allgemeinen Formel (II)

RₐSi(OR)_{b}O_{(4-a-b)/2}, Formel (II)

wobei R unabhängig voneinander ausgewählt wird aus der Gruppe der Alkylreste mit 1-8 Kohlenstoffatomen und der Aryl- oder Aralkylreste mit 6-20 Kohlenstoffatomen, R' unabhängig voneinander ausgewählt wird aus der Gruppe der Alkylreste mit 1-8 Kohlenstoffatomen, 1 ≤ a <2 und a+b <4.

Vorzugsweise besitzen die erfindungsgemäß eingesetzten Silikonharze (B) eine mittlere Molmasse (Zahlenmittel) Mn von mindestens 400 g/mol und besonders bevorzugt von mindestens 600 g/mol. Die mittlere Molmasse Mn liegt vorzugsweise bei höchstens 400000 g/mol, besonders bevorzugt bei höchstens 100000 g/mol, insbesondere bei höchstens 50000 g/mol.

Die erfindungsgemäß eingesetzten Silikonharze (B) können bei 23°C und 1000 hPa sowohl fest als auch flüssig sein, wobei die bevorzugt eingesetzten Silikonharze (B) flüssig sind. Vorzugsweise besitzen die Silikonharze (B) eine Viskosität von 10 bis 100000 mPas, vorzugsweise von 50 bis 50000 mPas, insbesondere von 100 bis 20000 mPas. Die Silikonharze (B) besitzen vorzugsweise ein Polydispersität (Mw/Mn) von maximal 5, bevorzugt von maximal 3.

Die Silikonharze (B) können sowohl in reiner Form als auch in Form einer Lösung in einem geeigneten Lösungsmittel eingesetzt werden.

Als Lösungsmittel können dabei Substanzen wie Ether (z. B. Diethylether, Methyl-t-butylether, Etherderivate des Glycols, THF), Ester (z. B. Ethylacetat, Butylacetat, Glycolester), Kohlenwasserstoffe (z. B. Pentan, Cyclopentan, Hexan, Cyclohexan, Heptan, Octan oder auch längerkettige verzweigte und unverzweigte Alkane), Ketone (z. B. Aceton, Methylethylketon), Aromaten (z. B. Toluol, Xylol, Ethylbenzol, Chlorbenzol) oder auch Alkohole (z. B. Methanol, Ethanol, Glycol, Propanol, iso-Propanol, Glycerin, Butanol, iso-Butanol, t-Butanol) dienen.

Vorzugsweise werden jedoch Silikonharze (B) eingesetzt, die frei von organischen Lösungsmitteln sind.

Bei den erfindungsgemäß eingesetzten Silikonharzen (B) handelt es sich um handelsübliche Produkte oder sie können nach in der Siliciumchemie gängigen Methoden hergestellt werden.

Bevorzugt handelt sich bei dem Alkoxysilan-haltigen Silikonharz/Silikonintermediat (B) um SILRES® SY 231 (methoxyfunktionelles Methyl-/Phenylsilikonharz der Firma Wacker), SILRES® IC 232 (methoxyfunktionelles Methyl-/Phenylsilikonintermediat der Firma Wacker), SILRES® IC 678 (methoxyfunktionelles Phenylsilikonintermediat der Firma Wacker), SILRES® IC 368 bei der Wacker Chemie AG, DOW CORNING® 3074 (methoxyfunktionelles Methyl-/Phenylsilikonintermediat der Firma Dow Corning) oder DOW CORNING® US-CF 2403 Resin (methoxyfunktionelles Methylsilikonintermediat der Firma Dow Corning), DOW CORNING® RSN-5314 Resin (methoxyfunktionelles Methyl/Phenylsilikonintermediat der Firma Dow Corning).

In einer besonders bevorzugten Ausführungsform der vorliegenden Erfindung handelt es sich bei Komponente (B) um ein lösungsmittelfreies, flüssiges Phenylsilikonintermediat, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES® IC 368 bei der Wacker Chemie AG).

Ebenfalls Gegenstand der vorliegenden Erfindung sind Verfahren zur Herstellung der erfindungsgemäßen Bindemittel, umfassend die Umsetzung von einem Addukt (A) aus einem Isocyanatoalkylalkoxysilan (A1) und einem Alkohol (A2), mit einem Alkoxysilan-haltigen Alkyl- und/oder Aryl-Silikonharz (Silikonintermediat) (B), optional in Gegenwart eines Katalysators (C), einem Alkohol (D) und/oder Wasser.

Die erfindungsgemäße Umsetzung von Addukt (A) mit Alkoxysilan-haltigem Alkyl- und/oder Aryl-Silikonharz (Silikonintermediat) (B) kann diskontinuierlich oder kontinuierlich erfolgen. Die Reaktion kann bei Temperaturen im Bereich von 30 - 150 °C, insbesondere im Bereich von 50 - 150 °C durchgeführt werden.

Zur Beschleunigung der Reaktion können optional Katalysatoren (C), die in der Silanchemie üblich sind, eingesetzt werden. In einer bevorzugten Ausführungsform der vorliegenden Erfindung werden als Katalysatoren (C) jene ausgewählt aus der Gruppe umfassend organische Carbonsäuren mit einem Schmelzpunkt > 60 °C, Tetraalkylammoniumcarboxylate, Metallkomplexe mit Chelatliganden, organische Sn(IV)-, Sn(II)-, Zn-, Bi-Verbindungen, tertiäre Amine, phosphorhaltige, bevorzugt phosphor- und stickstoff-haltige Katalysatoren, organische Sulfonsäuren in unblockierter oder blockierter Form oder Mischungen hieraus eingesetzt.

Als Katalysatoren (C) können beispielsweise organische Carbonsäuren mit einem Schmelzpunkt > 60 °C verwendet werden. Beispiele geeigneter Carbonsäuren sind insbesondere Salicylsäure, Benzoesäure, Zitronensäure, Phthalsäure, Terephthalsäure, Isophthalsäure, Dodecansäure, 1,12-Dodecandisäure und/oder Ascorbinsäure. Bevorzugt werden Salicylsäure, Zitronensäure oder Benzoesäure verwendet, wobei auch Mischungen der genannten Carbonsäuren eingesetzt werden können.

Als Katalysator (C) kann alternativ auch ein Tetraalkylammoniumcarboxylat eingesetzt werden. Beispiele hierfür sind Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethyl-ammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutyl-.ammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden.

Als Katalysator (C) können darüber hinaus auch Metallkomplexe mit Chelatliganden verwendet werden. Bei den Chelatliganden handelt es sich um organische Verbindungen mit wenigstens zwei funktionellen Gruppen, die an Metallatome oder -ionen koordinieren können. So können beispielsweise die Aluminium- und Zirkon-Chelatkomplexe, wie sie in US 4,772,672 beschrieben sind, als Katalysator verwendet werden. Bevorzugte Metallchelate sind Chelate auf Basis von Aluminium-, Zirkon-, Titan- und/oder Bor, wie beispielsweise Aluminiumethyl-acetoacetat und/oder Zirkonethylacetoacetat.

Als Katalysator (C) können zur Katalyse auch organische Sn(IV)-, Sn(II)-, Zn-, Bi-Verbindungen oder tertiäre Amine eingesetzt werden.

Als Katalysator (C) kann weiterhin auch ein phosphorhaltiger, bevorzugt phosphor- und stickstoffhaltiger Katalysator eingesetzt werden. Dabei können auch Mischungen aus zwei oder mehreren verschiedenen Katalysatoren eingesetzt werden. Beispiele für geeignete phosphorhaltige Katalysatoren sind substituierte Phosphonsäurediester und Diphosphonsäurediester, vorzugsweise aus der Gruppe bestehend aus acyclischen Phosphonsäurediestern, cyclischen Phosphonsäurediestern, acyclischen Diiphosphonsäurediestern und cyclischen Diphosphonsäurediestern. Derartige Katalysatoren sind beispielsweise in der DE-A 102005045228 beschrieben.

Als Katalysator (C) kann bevorzugt auch ein aminblockierter Phosphorsäureester und besonders bevorzugt ein aminblockierter Phosphorsäureethylhexylester oder aminblockierter Phosphorsäurephenylester eingesetzt werden. Als Beispiele für Amine, mit welchem die Phosphorsäureester blockiert werden, sind insbesondere tertiäre Amine, beispielsweise Triethylamin, zu nennen. Besonders bevorzugt werden zur Blockierung der Phosphorsäureester tertiäre Amine eingesetzt, die eine gute Wirksamkeit des Katalysators bei Härtungstemperaturen von 100 bis 160 °C aufweisen. Bestimmte mit Amin blockierte Phosphorsäurekatalysatoren sind auch kommerziell erhältlich (z. B. Nacure-Typen der Fa. King Industries). Beispielsweise sei der unter der Bezeichnung Nacure 4167 von der Firma King Industries Amin-blockierte Phosphorsäureteilester als besonders geeigneter Katalysator genannt.

Als Katalysator (C) können auch organische Sulfonsäuren in unblockierter oder blockierter Form verwendet werden. Als Sulfonsäure ist grundsätzlich jede organische Sulfonsäure geeignet, bevorzugt sind p-Toluolsulfonsäure und Dodecylbenzolsulfonsäure. Für thermisch, d. h. oberhalb von 100 °C vernetzende Beschichtungssysteme können diese Sulfonsäuren erfindungsgemäß auch in amin-neutralisierter Form bevorzugt eingesetzt werden. Erfindungsgemäß können auch latente, nicht-ionogene Sulfonsäurederivate, die erst oberhalb von 100 °C Sulfonsäuren freisetzen, wie z. B. Addukte von Sulfonsäuren an epoxidhaltige Komponenten, wie es in DE-OS 23 56768 beschrieben wird, eingesetzt werden.

Auch Salze der Trifluormethansulfonsaure (Triflate) sind geeignete Sulfonsäure-basierte Katalysatoren.

Der Katalysator (C) in den erfindungsgemäßen Beschichtungsmitteln kann allein aus den oben genannten Alternativen bestehen, es können aber auch beliebige Mischungen der Katalysatoren eingesetzt werden.

Werden Katalysatoren eingesetzt, werden diese bevorzugt in einer Konzentration im Bereich von 0,001 bis 5 Gew.-%, vorzugsweise im Bereich von 0,2 bis 3 Gew.-%, bezogen auf das Gesamtgewicht der Reaktionspartner, eingesetzt.

Optional kann die Reaktion in Gegenwart eines Alkohols (D) erfolgen, wobei die Beschreibung für Alkohol (D) der obengenannten Beschreibung des Alkohols (A2) entspricht.

Werden Alkohole (D) eingesetzt, werden diese bevorzugt in einer Konzentration im Bereich von 0,1 bis 10 Gew.-%, vorzugsweise im Bereich von 0,5 bis 5 Gew.-%, bezogen auf das Gesamtgewicht der Reaktionspartner, eingesetzt.

Optional kann die Reaktion in Gegenwart von Wasser erfolgen. Wird Wasser eingesetzt, wird dieses bevorzugt in einer Konzentration im Bereich von 0,001 bis zu 5 Gewichtsprozent, bezogen auf das Gesamtgewicht der Reaktionspartner, eingesetzt.

Bevorzugt wird das Addukt (A), hergestellt aus einem Isocyanatoalkylalkoxysilan (A1) und einem Alkohol (A2), in einer Konzentration im Bereich von 1 bis 98 Gew.-%, vorzugsweise im Bereich von 10 bis 80 Gew.-%, ganz besonders bevorzugt im Bereich von 40-60 Gew.-% bezogen auf das Gesamtgewicht der Reaktionspartner, eingesetzt.

Bevorzugt wird das Alkoxysilan-haltige Alkyl- und/oder Aryl-Silikonharz (Silikonintermediat) (B) in einer Konzentration im Bereich von 1 bis 98 Gew.-%, vorzugsweise im Bereich von 10 bis 80 Gew.-%, ganz besonders bevorzugt im Bereich von 40-60 Gew.-% bezogen auf das Gesamtgewicht der Reaktionspartner, eingesetzt.

In einer ganz besonders bevorzugten Ausführungsform werden Addukt (A) und Alkoxysilanhaltiges Alkyl- und/oder Aryl- Silikonharz (Silikonintermediat) (B) in gleichem Gewichtsverhältnis, z. B. 45 Gew.-% Addukt (A) und 45 Gew.-% Silikonharz (Silikonintermediat) (B), eingesetzt.

Gegenstand der Erfindung ist auch die Verwendung der erfindungsgemäßen Bindemittel im Bereich der Lack-, Klebstoff- und Dichtstoffanwendungen.

Bevorzugt wird das Reaktionsprodukt als vernetzende Komponente in Lack-, Klebstoff- und Dichtstoffanwendungen verwendet.

Besonders bevorzugt wird es für kratzbeständige und flexible Klarlacke verwendet. Dabei wird es zur Optimierung der Lackeigenschaften entweder allein eingesetzt oder in Kombination mit weiteren polymeren Bindemitteln, die auch vernetzbare funktionelle Gruppen tragen können, abgemischt.

Weiterer Gegenstand der vorliegenden Erfindung sind Beschichtungsmittel, welche vorzugsweise bei Temperaturen von 20 bis 150 °C härtbar sind, enthaltend
I) mindestens ein erfindungsgemäßes Bindemittel,
II) optional eine oder mehrere zusätzliche Bindemittelkomponenten,
III) optional einen Katalysator,
IV) optional Hilfs- und Zusatzstoffe,
V) optional organische Lösemittel und
VI) optional Aminosilane.

Die bei der erfindungsgemäßen Verwendung einzusetzenden Lacke können lösemittelfrei oder lösemittelhaltig sein. Insbesondere bevorzugt sind die einzusetzenden Lacke nicht-wässrig. Nicht wässrig im Sinne der vorliegenden Erfindung meint einen Gehalt an Wasser im Lack von nicht mehr als 1,0 Gew.-%, vorzugsweise nicht mehr als 0,5 Gew.-%, bezogen auf den Lack.

Der Anteil des erfindungsgemäßen Bindemittels als Komponente I) in dem erfindungsgemäßen Beschichtungsmittel beträgt bevorzugt 30-99 Gew.-%, besonders bevorzugt 20 bis 80 Gew.-%, bezogen auf das Beschichtungsmittel.

Weiterhin kann das erfindungsgemäße Beschichtungsmittel optional eine oder mehrere zusätzliche Bindemittel-Komponenten II) enthalten. Grundsätzlich eignen sich als Bindemittel-Komponenten alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel eingesetzt, die über reaktive funktionelle Gruppen mit aciden Wasserstoffatomen verfügen. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Trialkoxysilan-Funktionalitäten.

Als Bindemittel mit funktionellen Gruppen werden bevorzugt Hydroxylgruppen-haltige Polymere, insbesondere Hydroxylgruppen-haltige Polyester, Polyether, Poly(meth)acrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Poly(meth)acrylate mit einer OH-Zahl von 20 bis 150 mg KOH/g und einem mittleren Molekulargewicht von 500 bis 6000 g/mol als Bindemittelkomponenten eingesetzt. Unter Poly(meth)acrylaten sind dabei sowohl Polyacrylate als auch Polymethacrylate zu verstehen. Die Hydroxylzahl (OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden.

Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgte in Tetrahydrofuran als Eluent nach DIN 55672-1.

Als hydroxylgruppenhaltige (Meth)acryl-Copolymerisate können Harze mit einer Monomerzusammensetzung, wie sie z. B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0 - 30, vorzugsweise 3 - 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 - 20000 g/mol, die Glasübergangstemperatur beträgt vorzugsweise -40 °C bis +60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 - 250 mg KOH/g, besonders bevorzugt 90 - 190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in WO 93/15849 beschrieben sind. Als Polyesterpolyole können auch Polyadditionsprodukte von Caprolacton an niedermolekulare Di- und Triole, wie sie z. B. unter der Bezeichnung CAPA (Perstorp) erhältlich sind, eingesetzt werden. Das rechnerisch bestimmte zahlenmittlere Molgewicht beträgt vorzugsweise 500 - 5000 g/mol, besonders bevorzugt 800 - 3000 g/mol, die mittlere Funktionalität beträgt vorzugsweise 2,0 - 4,0, bevorzugt 2,0 - 3,5.

Als erfindungsgemäß zu verwendende urethan- und estergruppenhaltige Polyole kommen prinzipiell auch solche zum Einsatz, wie sie in EP 140 186 beschrieben sind. Bevorzugt werden urethan- und estergruppenhaltige Polyole, zu deren Herstellung HDI, IPDI, Trimethylhexamethylendiisocyanat (TMDI) oder H₁₂-MDI verwendet werden, eingesetzt. Das zahlenmittlere Molgewicht beträgt vorzugsweise 500 - 2000 g/mol, die mittlere Funktionalität liegt insbesondere im Bereich von 2,0 - 3,5.

Auch Trialkoxysilan-funktionelle Bindemittel eignen sich zur Verwendung als Komponente II). Derartige Harze können gewonnen werden durch Copolymerisation von Acrylat- oder Methacrylat-Monomeren mit acryl- oder methacryl-funktionellen Alkyl-Trialkoxysilan-Derivaten (z. B. Dynasylan® MEMO der Evonik Resource Efficiency GmbH), wie sie zum Beispiel in WO 92/11328 beschrieben sind. Ein alternativer Syntheseweg besteht in der Derivatisierung von hydroxylgruppenhaltigen Polyethern, Polyestern, Polycarbonat-diolen oder Polyacrylaten mit Isocyanatopropyltrialkoxysilan, wie er beispielsweise in WO 2008/131715 in den Beispielen 3 und 4 beschrieben ist.

Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil von II) in dem erfindungsgemäßen Beschichtungsmittel beträgt, falls vorhanden, bevorzugt 10-80 Gew.-%, bezogen auf das Beschichtungsmittel, insbesondere 20 bis 80 Gew.-%.

Das Massenverhältnis der Komponente I) zu der Komponente II) beträgt in dem erfindungsgemäßen Beschichtungsmittel vorzugsweise 3:7 bis 7:3.

Die Reaktivität des erfindungsgemäßen Reaktionsproduktes kann jedoch für eine Aushärtungsgeschwindigkeit bei Umgebungstemperatur nicht ausreichend sein. Zur Steigerung der Vernetzungsgeschwindigkeit können daher vorzugsweise Katalysatoren zugesetzt und/oder die Aushärtung bei Temperaturen oberhalb Umgebungstemperatur durchgeführt werden.

Zur Erzielung einer ausreichenden Aushärtungsgeschwindigkeit bei Aushärtungstemperaturen von weniger als 100 °C werden vorzugsweise Katalysatoren III) eingesetzt. Geeignete Katalysatoren sind insbesondere Lewis-Säuren, Metall- oder Übergangsmetallchelate, -Salze oder -Partikel, beispielsweise auf Basis von Titan-, Aluminium-, Zinn- oder Zirkoniumkomplexen, Sulfonsäuren in freier aber auch neutralisierter oder adduktierter Form, wie sie beispielsweise in DE 2356768 beschrieben sind, Phosphorsäure oder phosphorige Säuren und deren Derivate (WO 2008/074491, Seite 18, Zeilen 1 - 17), hoch siedende Säuren, quarternäre Ammoniumcarboxylate oder auch Kombinationen der genannten Verbindungen.
Bevorzugt werden Übergangsmetallchelate oder -salze, hoch siedende Säuren, quarternäre Ammoniumcarboxylate oder Kombinationen der genannten Verbindungen eingesetzt.

Besonders bevorzugt ist die Komponente III) mindestens ein Katalysator ausgewählt aus der Gruppe IIIa) der organischen Carbonsäuren mit einem Schmelzpunkt oberhalb von 60 °C und/oder der Gruppe IIIb) der Tetraalkylammoniumcarboxylate.

Geeignete organische Carbonsäuren mit einem Schmelzpunkt oberhalb von 60 °C (bei Normaldruck) sind bei Raumtemperatur nicht flüchtige Verbindungen. Beispiele vorteilhaft einzusetzender Carbonsäuren sind Salicylsäure, Benzoesäure, Citronensäure, Isophthalsäure, Phthalsäure, Terephthalsäure und/oder Trimellithsäure. Bevorzugt werden im Rahmen der vorliegenden Erfindung Salicylsäure und Benzoesäure verwendet.

Als Katalysator IIIb) wird ein Tetraalkylammoniumcarboxylat eingesetzt. Beispiele hierfür sind Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden. Bevorzugt werden Tetraethylammoniumbenzoat und/oder Tetrabutylammoniumbenzoat eingesetzt.

Die Katalysatorkomponente III) in den erfindungsgemäßen Beschichtungsmitteln kann allein aus den oben genannten Alternativen IIIa) oder IIIb) bestehen, es können aber auch beliebige Mischungen der Katalysatoren IIIa) und IIIb) eingesetzt werden. Derartige Mischungen aus IIIa) und IIIb) weisen insbesondere ein Massenverhältnis von 9 : 1 bis 1 : 9 auf. Vorzugsweise beträgt der Anteil der Komponente III) bis zu 4 Gew.-%, bezogen auf das Beschichtungsmittel, vorzugsweise 0,1 bis 4 Gew.-%.

Ganz besonders bevorzugt wird als Katalysatorkomponente III) die gleiche Verbindung wie als Katalysator C) für die Herstellung des erfindungsgemäßen Bindemittels verwendet.

Das erfindungsgemäße Beschichtungsmittel kann zusätzlich in der Lacktechnologie bekannte Hilfsstoffe und/oder Zusatzstoffe IV) wie Stabilisatoren, Lichtschutzmittel, Katalysatoren, Füllstoffe, Pigmente, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können in der Komponente IV) der erfindungsgemäßen Beschichtungsmittel auch in der Lacktechnologie übliche anorganische oder organische Farb- und/oder Effektpigmente eingearbeitet werden.

Die Komponente IV) ist im Falle von pigmentfreien Beschichtungsmitteln, d. h. Klarlacken, vorzugsweise in Mengen von 0,5 bis zu 8 Gew.-%, insbesondere 1 bis 6 Gew.-%, bezogen auf das Beschichtungsmittel, in dem erfindungsgemäßen Beschichtungsmittel enthalten. Im Falle von pigment- und/oder füllstoffhaltigen Beschichtungsmitteln kann der Gehalt von Komponente IV) 5 bis 80 Gew.-%, insbesondere 10 bis 70 Gew.-% betragen, bezogen das Beschichtungsmittel.

Weiterhin kann das erfindungsgemäße Beschichtungsmittel organische Lösemittel als Komponente V) enthalten. Geeignete Lösemittel sind z. B. Ketone, Ester, Alkohole oder Aromaten.

Die Komponente V) ist vorzugsweise in Mengen von 20 bis zu 60 Gew.-%, insbesondere 20 % bis 50 %, bezogen auf das Beschichtungsmittel, in dem erfindungsgemäßen Beschichtungsmittel enthalten. Die Menge der Komponente V) orientiert sich an der einzustellenden Applikationsviskosität des Beschichtungsmittels.

Bei der Komponente VI) der erfindungsgemäßen Beschichtungsmittel handelt es sich um mindestens ein Aminosilan. Insbesondere handelt es sich bei dem mindestens einen Aminosilan um eines der allgemeinen Formel AₘSiYₙ, worin A eine substituierte oder unsubstituierte Aminoalkylgruppe, eine substituierte oder unsubstituierte Diaminodialkylgruppe oder eine substituierte oder unsubstituierte Triaminotrialkylgruppe darstellt, die Gruppen Y gleich oder verschieden sind, wobei Y für OH, ONa, OK, OR', OCOR', OSiR'₃, Cl, Br, I oder NR'₂ steht, m gleich 1 oder 2 und n gleich 1, 2 oder 3 sind, mit der Maßgabe m+n = 4, wobei die Gruppe R' unabhängig Wasserstoff, lineare oder verzweigte Alkyl-, Cycloalkyl-, Alkenyl-, Cycloalkenyl-, Alkinyl-, Cycloalkinyl-, Aryl- oder Heteroarylgruppen sind, jeweils 1 bis 18 C-Atomen aufweisen und jeweils ggf. substituiert sein können. Vorzugsweise ist m gleich 1 und n gleich 3. Weiterhin bevorzugt ist Y ausgewählt aus OH oder OR', wobei OR' besonders bevorzugt ist. In diesem Falle ist R' insbesondere ausgewählt aus Methyl- oder Ethylgruppen, wobei Methylgruppen insbesondere bevorzugt sind. Es können auch dimere oder polykondensierte Oligomere dieser Aminosilane eingesetzt werden.

Bevorzugte Aminosilane sind die ausgewählt aus der Gruppe bestehend aus 3-Aminopropyltrimethoxysilan, 3-Aminopropyltriethoxysilan, 2- Aminoethyl-3-aminopropyltrimethoxysilan, 3-Aminopropyl(diethoxymethoxysilan), 3-Aminopropyl(tripropoxysilan), 3-Aminopropyl(dipropoxymethoxysilan), 3-Aminopropyl(tridodecanoxysilan), 3-Aminopropyl(tritetradecanoxysilan), 3-Aminopropyl(trihexadecanoxysilan), 3-Aminopropyl(trioctadecanoxysilan), 3-Aminopropyl(didodecanoxy)tetradecanoxysilan, 3-Aminopropyl(dodecanoxy)- tetradecanoxy(hexadecanoxy)silan, 3-Aminopropyl(dimethoxymethylsilan), 3-Aminopropyl(methoxydimethylsilan), 3-Aminopropyl(hydroxydimethylsilan), 3-Aminopropyl(diethoxymethylsilan), 3-Aminopropyl(ethoxydimethylsilan), 3-Aminopropyl(dipropoxymethylsilan), 3-Aminopropyl(propoxydimethylsilan), 3-Aminopropyl(diisopropoxymethylsilan), 3-Aminopropyl(isopropoxydimethylsilan), 3-Aminopropyl(dibutoxymethylsilan), 3-Aminopropyl(butoxydimethylsilan), 3-Aminopropyl(disiobutoxymethylsilan), 3-Aminopropyl(isobutoxydimethylsilan), 3-Aminopropyl(didodecanoxymethylsilan), 3-Aminopropyl(dodecanoxydimethylsilan), 3-Aminopropyl(ditetradecanoxymethylsilan), 3-Aminopropyl(tetradecanoxy-dimethylsilan), 2-Aminoethyl(trimethoxysilan), 2-Aminoethyl(triethoxysilan), 2-Aminoethyl(diethoxymethoxysilan), 2-Aminoethyl(tripropoxysilan), 2-Aminoethyl(dipropoxymethoxysilan), 2-Aminoethyl(tridodecanoxysilan), 2-Aminoethyl(tritetradecanoxysilan), 2-Aminoethyl(trihexadecanoxysilan), 2-Aminoethyl(trioctadecanoxysilan), 2-Aminoethyl(didodecanoxy)tetradecanoxysilan, 2-Aminoethyl(dodecanoxy)tetradecanoxy(hexadecanoxy)silan, 2-Aminoethyl(dimethoxymethylsilan), 2-Aminoethyl(methoxydimethylsilan), 2-Aminoethyl(diethoxymethylsilan), 2-Aminoethyl(ethoxydimethylsilan), 1-Aminomethyl(trimethoxysilan), 1-Aminomethyl(triethoxysilan), 1-Aminomethyl(diethoxymethoxysilan), 1-Aminomethyl(dipropoxymethoxysilan), 1-Aminomethyl(tripropoxysilan), 1-Aminomethyl(trimethoxysilan), 1-Aminomethyl(dimethoxymethylsilan), 1-Aminomethyl(methoxydimethylsilan), 1-Aminomethyl(diethoxymethylsilan), 1-Aminomethyl(ethoxydimethylsilan), 3-Aminobutyl(trimethoxysilan), 3-Aminobutyl(triethoxysilan), 3-Aminobutyl(diethoxymethoxysilan), 3-Aminobutyl(tripropoxysilan), 3-Aminobutyl(dipropoxymethoxysilan), 3-Aminobutyl(dimethoxymethylsilan), 3-Aminobutyl(diethoxymethylsilan), 3-Aminobutyl(dimethylmethoxysilan), 3-Aminobutyl(dimethylethoxysilan), 3-Aminobutyl(tridodecanoxysilan),3-Aminobutyl(tritetradecanoxysilan), 3-Aminobutyl(trihexadecanoxysilan), 3-Aminobutyl(didodecanoxy)tetradecanoxysilan, 3-Aminobutyl(dodecanoxy)tetra-decanoxy(hexadecanoxy)silan, 3-Amino-2-methylpropyl(trimethoxysilan), 3-Amino-2-methyl-propyl(triethoxysilan), 3-Amino-2-methylpropyl(diethoxymethoxysilan), 3-Amino-2-methyl-propyl(tripropoxysilan), 3-Amino-2-methyl propyl(dipropoxymethoxysilan), 3-Amino-2-methyl-propyl(tridodecanoxysilan), 3-Amino-2-methylpropyl(tritetradecanoxysilan), 3-Amino-2-methyl-propyl(trihexadecanoxysilan), 3-Amino-2-methylpropyl(trioctadecanoxysilan), 3-Amino-2-methyl-propyl(didodecanoxy)tetradecanoxysilan, 3-Amino-2-methyl-propyl(dodecanoxy)tetradecanoxy(hexadecanoxy)silan, 3-Amino-2-methylpropyl(dimethoxymethylsilan), 3-Amino-2-methyl-propyl(methoxydimethylsilan), 3-Mercapto-2-methyl-propyl(diethoxymethylsilan), 3-Mercapto-2-methyl-propyl(ethoxydimethylsilan), 3-Mercapto-2-methyl-propyl(dipropoxymethylsilan), 3-Amino-2-methyl-propyl(propoxydimethylsilan), 3-Amino-2-methyl-propyl(diisopropoxymethylsilan), 3-Amino-2-methyl-propyl(isopropoxydimethylsilan), 3-Amino-2-methyl-propyl(dibutoxymethylsilan), 3-Amino-2-methyl-propyl(butoxydimethylsilan), 3-Amino-2-methyl-propyl(disiobutoxymethylsilan), 3-Amino-2-methyl-propyl(isobutoxydimethylsilan), 3-Amino-2-methyl-propyl(didodecanoxymethylsilan), 3-Amino-2-methyl-propyl(dodecanoxy-dimethylsilan), 3-Amino-2-methyl-propyl(ditetradecanoxymethylsilan) oder 3-Amino- 2-methylpropyl (tetradecanoxydimethyl-silan), triaminofunktionelles Propyltri-methoxysilan, Bis(3-trimethoxysilylpropyl)-amin, Bis(3-triethoxysilylpropyl)-amin, N-Benzyl-N-(2-aminoethyl)-3-aminopropyltrimethoxysilan-Hydrochlorid, N-Benzyl-N-(2-aminoethyl)-3-aminopropyltrimethoxysilan-Hydroacetat, N-(n-Butyl)-3-aminopropyltrimethoxysilan, 3-Aminopropylmethyldiethoxysilan, N-Vinylbenzyl-N-(2-aminoethyl)-3-aminopropylpolysiloxan und N-(2-Aminoethyl)-3-aminopropylmethyldimethoxysilan.
Bevorzugte Aminosilane oder Aminoalkylsilane sind substituierte oder unsubstituierte Aminosilan-Verbindungen, insbesondere 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan und N-(n-Butyl)-3-aminopropyltrimethoxysilan.

Besonders bevorzugt ist das Aminosilan eines ausgewählt aus der Gruppe bestehend aus 3-Aminopropyltrimethoxysilan (DYNASYLAN® AMMO), 3-Aminopropyltriethoxysilan (DYNASYLAN® AMEO), 3-Aminopropylmethyldiethoxysilan (DYNASYLAN® 1505), N-(n-Butyl)-3-aminopropyltrimethoxysilan (DYNASYLAN® 1189) und N-(2-Aminoethyl)-3-aminopropyltrimethoxysilan (DYNASYLAN® DAMO), (H₃CO)₃Si(CH₂)₃NH(CH₂)₃Si(OCH₃)₃ (Bis-AMMO), (H₅C₂O)₃Si(CH₂)₃NH(CH₂)₃Si(OC₂H₅)₃ (Bis-AMEO), (H₃CO)₃Si(CH₂)₃NH(CH₂)₂NH(CH₂)₂NH(CH₂)₃Si(OCH₃)₃ (Bis-DAMO) (jeweils von Evonik Resource Efficiency GmbH).

Die Menge an Komponente VI) in dem erfindungsgemäßen Beschichtungsmittel beträgt bevorzugt 5 bis 30 Gew.-%, insbesondere bevorzugt 10 bis 20 Gew.-%, jeweils bezogen auf das Beschichtungsmittel.

Die Summe aller Anteile der Komponenten I) bis VI) ergibt 100 Gew.-%. Bevorzugt bestehen die erfindungsgemäßen Beschichtungsmittel aus den genannten Komponenten I) bis V).

Die erfindungsgemäßen Beschichtungsmittel können insbesondere zur Beschichtung von Holz, Mitteldichte Holzfaser-Platten, Papier, Kunststoff, Kompositen, Glas, Textilien oder Metall eingesetzt werden.

Insbesondere Klarlacke, enthaltend das erfindungsgemäße Reaktionsprodukt oder Beschichtungsmittel sind ebenfalls Gegenstand der vorliegenden Erfindung. Die erfindungsgemäßen Beschichtungsmittel sind auch für die Mehrschichtlackierung, z. B. als Klarlack in der Automobil-Serienlackierung geeignet.

Gegenstand der vorliegenden Erfindung sind ebenfalls Metall- oder Kunststoffbeschichtungszusammensetzungen, insbesondere für Automobilkarossen, Motor- und Fahrräder, Gebäudeteile und Haushaltsgeräte, welche das erfindungsgemäße Reaktionsprodukt umfassen.

Die Herstellung der erfindungsgemäßen Beschichtungsmittel erfolgt durch Mischung der vorab beschriebenen Komponenten. Das Mischen und Dispergieren der Komponenten kann in dem Fachmann bekannten Mischern erfolgen, beispielsweise Rührbehältern, Dissolvern, Perlmühlen, Walzenstühlen, etc., aber auch kontinuierlich mittels Statikmischern.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

Sofern nicht anders angegeben, beziehen sich die Mengenangaben in Prozent in den Beispielen auf das Gewicht.

### Eingesetzte Produkte:

**SILRES® IC 368:** Methoxyfunktionalisiertes Methyl-, Phenyl-Polysiloxanintermediat, Wacker Chemie AG
**Setalux 1767 VV-65:** Polyacrylatpolyol, Nuplex Resins B.V.
**Setalux 1760 VB-64:** Polyacrylatpolyol, Nuplex Resins B.V.
**Vestanat® EP Cat 11B:** Tetraethylammoniumbenzoat in Butanol, Evonik Resource Efficiency GmbH
**Vestanat® EP-M60, Vestanat® EP-M95, Vestanat® EP-M120:** Isocyanatopropyl-trimethoxysilan-Addukte mit mehrwertigem Alkohol, Evonik Resource Efficiency GmbH

**2K-Polyurethan Basecoat:** Zur Herstellung des Basecoats wurde zunächst die Pigmentierung hergestellt, in dem 54,52% Setalux 1187, 45,35% Kronos 2310 und 0,14% Aerosil R972 vorgelegt und 20 min mittels Scandex angerieben wurden. 75,36% dieser Pigmentierung wurden dann mit 0,56% einer 1%igen Lösung von Dibutylzinndilaurat in Butylacetat, 5,00% Byk 358 N (Byk Chemie GmbH) 10%ig in Butylacetat gelöst, 0,78% Butylacetat und 18,30% Vestanat® T1890L (Isophorondiisocyanat, homopolymer, Evonik Resource Efficiency GmbH) unter Rühren zum entsprechenden Weißlack-Ansatz vermischt. Der Weißlack wurde dann mittels Schleuder auf Alublech appliziert (Schleuderbedingungen: 30 s bei 650-700 Upm) und anschließend 30 min bei 80 °C gehärtet.

### 29-Si-NMR:

Die Messung der 29-Si-NMR-Proben erfolgte an einem 500 MHz-Gerät der Firma Bruker®. Die Resonanzfrequenz für den 29-Si-Kern beträgt 39,7 MHz. Alle chemischen Verschiebungen sind gegenüber Tetramethylsilan "TMS" angegeben (δ = 0 ppm). Die quantitative Auswertung der Spektren erfolgte durch Integration der Signale über die Messsoftware. Zwecks besserer Übersichtlichkeit werden hier nur die Verschiebungen der M-Einheiten der Formel R₃SiO_{1/2} angegeben.

### Beispiel 1: Herstellung des erfindungsgemäßen Bindemittels 1 (M60+Silres, TEAB)

200 g Vestanat EP-M60, 200 g SILRES IC 368 und 2 g Tetraethylammoniumbenzoat (TEAB) wurden in einen Kolben gegeben und dieser mit einem Rückflusskühler versetzt. Das Gemisch wurde dann unter Rühren auf 100 °C erwärmt. Nach 6 h Reaktionszeit wurde das erhaltene Bindemittel 1 abgekühlt. Es resultierte eine klare Flüssigkeit mit einer Viskosität (23°C) von 469 mPas. ²⁹Si- NMR-Signale (ppm) in DMSO: - 47 (3,6 mol-% Si von Me₃SiO_{1/2}), -49 (5,8 mol-% Si M-Struktur von Bindemittel 1)

### Beispiel 2: Herstellung des erfindungsgemäßen Bindemittels 2 (M95+Silres, TEAB)

200 g Vestanat EP-M95, 200 g SILRES IC 368 und 2 g Tetraethylammoniumbenzoat wurden in einen Kolben gegeben und dieser mit einem Rückflusskühler versetzt. Das Gemisch wurde dann unter Rühren auf 100 °C erwärmt. Nach 6 h Reaktionszeit wurde das erhaltene Bindemittel 2 abgekühlt. Es resultierte eine klare Flüssigkeit mit einer Viskosität (23°C) von 475 mPas. ²⁹Si-NMR-Signale (ppm) in CDCl₃: - 48 (3,5 mol% Si von Me₃SiO_{1/2}), -50 (3,4 mol-% Si M-Struktur von Bindemittel 2)

### Beispiel 3: Herstellung des erfindungsgemäßen Bindemittels 3 (M120+Silres, TEAB)

200 g Vestanat EP-M120, 200 g SILRES IC 368 und 2 g Tetraethylammoniumbenzoat wurden in einen Kolben gegeben und dann unter Rühren auf 100 °C erwärmt. Nach 6 h Reaktionszeit wurde das erhaltene Bindemittel 3 mit 30% Xylol verdünnt und abgekühlt. Es resultierte eine klare Flüssigkeit mit einer Viskosität (23°C) von 19 mPas. ²⁹Si- NMR-Signale (ppm) in DMSO: - 47 (3,8 mol-% Si von Me₃SiO_{1/2}), -49 (6,2 mol-% Si M-Struktur von Bindemittel 3)

### Untersuchung der Verträglichkeit der erfindungsgemäßen Reaktionsprodukte mit organischen Harzen:

Es wurden 50 g des jeweiligen erfindungsgemäßen Bindemittels mit 50 g eines organischen Harzes (s. Tabelle 1) versetzt und unter Rühren bei Raumtemperatur vermischt. Wenn eine klare Lösung erhalten wurde, wurde die Verträglichkeit mit "positiv" bewertet.

**Tabelle 1: Ergebnisse der Untersuchungen 1a - 3a**

| **Untersuchung** | **1a** | **2a** | **2b** | **3a** |
|---|---|---|---|---|
| Bindemittel 1 | 50 | | | |
| Bindemittel 2 | | 50 | 50 | |
| Bindemittel 3 | | | | 50 |
| Setalux 1760 VB 64 | 50 | 50 | | 50 |
| Setalux 1767 VV-65 | | | 50 | |
| Verträglichkeit | Positiv | Positiv | Positiv | Positiv |

### Untersuchung der Verträglichkeit nicht-erfindungsgemäßer Mischungen 4-7 mit organischen Harzen:

Es wurden die in Tabelle 2 genannten Komponenten in der angegebenen Menge unter Rühren bei Raumtemperatur vermischt. Wenn keine klare Lösung erhalten wurde, wurde die Verträglichkeit mit "negativ" bewertet (s. Tabelle 2).

**Tabelle 2: Ergebnisse der Untersuchungen der nicht-erfindungsgemäßen Mischungen 4-7**

| **Nicht erfindungsgemäße Mischungen** | **4** | **5** | **6** | **7** |
|---|---|---|---|---|
| Vestanat® EP-M95 | | 50 | 40 | 25 |
| SILRES® IC 368 | 50 | 25 | 20 | 25 |
| Setalux 1760 VB 64 | 50 | 25 | 40 | 50 |
| Verträglichkeit | Negativ | Negativ | Negativ | Negativ |

Überraschenderweise wurde gefunden, dass die erfindungsgemäßen Bindemittel 1-3 eine bessere Verträglichkeit mit organischen Harzen aufweisen als die Mischungen der Einzelkomponenten.

### Herstellung von Beschichtungsmitteln:

Für die Herstellung der erfindungsgemäßen Beschichtungsmittel I - VI wurden die in Tabelle 3 aufgeführten Produkte bei Raumtemperatur homogenisiert.

**Tabelle 3. Zusammensetzung der erfindungsgemäßen Beschichtungsmittel I - VI**

| **Position** | **I** | **II** | **III** | **IV** | **V** | **VI** |
|---|---|---|---|---|---|---|
| Bindemittel 1 | 33,93 | 99,01 | | | | |
| Bindemittel 2 | | | 34,96 | 99,01 | | |
| Bindemittel 3 | | | | | 47,13 | 98,62 |
| Setalux 1760 VB 64 | 52,99 | | 50,02 | | 51,55 | |
| Setalux 1767 VV-65 | | | | | | |
| Vestanat® EP Cat 11B | 1,01 | 0,99 | 1,24 | 0,99 | 1,32 | 1,38 |
| Xylol | 12,07 | | 13,78 | | | |

Zur Ermittlung der Lackeigenschaften wurden die erfindungsgemäßen Beschichtungsmittel I - VI jeweils mit einer 100 µm Rakel auf Bleche des Typs Gardobond S26 aufgezogen und 22 min bei 140°C getrocknet.

**Tabelle 4: Eigenschaften der aus den erfindungsgemäßen Beschichtungsmittel I - VI erhaltenen erfindungsgemäßen Beschichtungen**

| **Beschichtungen aus erfindungsgem. Beschichtungsmitteln** | **I** | **II** | **III** | **IV** | **V** | **VI** |
|---|---|---|---|---|---|---|
| Erichsen Tiefung [mm] (EN ISO 1520) | 4,3 | 4 | 5,5 | 4 | 5 | 3 |
| Pendelhärte (König) [s] n 7 d | 159 | 91 | 159 | 58 | 148 | 83 |
| MEK-Test [ASTM D 4752] (Doppelhübe, 1 kg Auflagegewicht) | >150 | >150 | >150 | >150 | >150 | >150 |
| Visuelle Beurteilung | Glänzend | Glänzend | Glänzend | Glänzend | Glänzend | Glänzend |

Mit den erfindungsgemäßen Beschichtungsmitteln I **-** VI können klebfreie, glänzende Lacke mit guter mechanischer als auch chemischer Beständigkeit erhalten werden.

Zur Ermittlung der Bewitterungsstabilität wurden die Beschichtungsmittel IV und VII jeweils mit einer 100 µm Rakel auf ein Alublech welches mit einem 2K-Polyurethan Basecoat beschichtet war, aufgezogen und 22 min bei 140°C getrocknet. Nach 7 Tagen wurden die beschichteten Bleche für 250 h der UV-A-Testbewitterung nach DIN EN ISO 4892-3:2014-1 (Zyklusnummer 1: 8 h trocken mit Bestrahlung durch UVA-340 Lampen mit 0,76 W/(m² nm) und 4h Kondensation ohne Bestrahlung) unterzogen.

**Tabelle 5: Test der Bewitterungsstabilität im UV-A-Test (nach DIN EN ISO 4892-3:2014-1)**

| **Beschichtungen enthaltend** | **erfindungsgemäßes Beschichtungsmittel IV** | | **Nicht erfindungsgemäßes Beschichtungsmittel VII** enthaltend 99,01% Mischung 4 und 0,99% Vestanat® EP Cat 11 B | |
|---|---|---|---|---|
| **QUV-A Testdauer** | 0 h | 250 h | 0 h | 250 h |
| Glanz 20° | 59 | 67 | 73 | 38 |
| Glanz 60° | 89 | 90 | 84 | 73 |

Die Daten aus Tabelle 5 belegen, dass das erfindungsgemäße Beschichtungsmittel IV, enthaltend das erfindungsgemäße Bindemittel 2, eine bessere Bewitterungsstabiltität zeigt als das nicht erfindungsgemäße Beschichtungsmitteln VII, welches nach 250 h Bewitterung schon einen starken Glanzverlust zeigt.

## Patentansprüche

1. Bindemittel auf Basis eines Reaktionsproduktes aus einem Addukt (A) von einem Isocyanatoalkylalkoxysilan (A1) und einem Alkohol (A2) mit einem Alkoxysilan-haltigen Q-Einheit-freien Alkyl- und/oder Aryl-Silikonharz (B).

2. Bindemittel gemäß Anspruch 1, **dadurch gekennzeichnet, dass** das Isocyanatoalkylalkoxysilan (A1) ausgewählt ist aus der Gruppe umfassend Isocyanatomethyltrimethoxysilan, Isocyanatomethyltriethoxysilan, Isocyanatomethyltri-iso-propoxysilan, 2-Isocyanatoethyltrimethoxysilan, 2-Isocyanatoethyltriethoxysilan, 2-Isocyanatoethyltri-iso-propoxysilan, 3-Isocyanato-n-propyltrimethoxysilan, 3-Isocyanato-n-propyltriethoxysilan, 3-Isocyanato-n-propyltri-iso-propoxysilan, 4-Isocyanato-n-butyltrimethoxysilan, 4-Isocyanato-n-butyltriethoxysilan und 4-Isocyanato-n-butyltri-iso-propoxysilan.

3. Bindemittel gemäß Anspruch 1 oder 2, **dadurch gekennzeichnet, dass** der Alkohol (A2) ein ein- oder mehrwertiger Alkohol ist.

4. Bindemittel gemäß Anspruch 3, **dadurch gekennzeichnet, dass** der mehrwertige Alkohol aus der Gruppe ausgewählt ist, die Ethylenglycol, 1,2-Propandiol, 1,3-Propandiol, 1,4-Butandiol, 1,5- Pentandiol, 1,6-Hexandiol, 1,10-Decandiol, 1,12-Dodecandiol, Glycerin, Isosorbit, Isomannit, Isoidit, 2,2,4-Trimethylhexandiol-1,6 und 2,4,4-Trimethylhexandiol-1,6 allein oder als beliebige Gemische dieser Isomeren, 2,2-Dimethyl-butandiol-1,3, 2-Methyl-pentandiol-2,4, 3-Methyl-pentandiol-2,4, 2,2,4-Trimethy-1-pentandiol-1,3, 2-Ethylhexandiol-1,3, 2,2-Dimethylhexandiol-1,3, 3-Methylpentandiol-1,5, 2-Methyl-pentandiol-1,5, 2,2-Dimethylpropandiol-1,3 (Neopentylglykol), Hydroxypivalinsäureneopentylglykolester, Polyethylenglykol, Polypropylenglykol, Sorbit, Pentaerythrit, 1,1,1-Trimethylolpropan, 3(4),8(9)-Bis(hydroxymethyl)-tricyclo[5.2.1.02,6]decan (Dicidol) und/oder 2,2-Bis-(4-hydroxycyclohexyl)propan umfasst.

5. Bindemittel gemäß einem oder mehreren der Ansprüche 1 bis 4, **dadurch gekennzeichnet, dass** das molare Verhältnis von OH-Gruppen der Alkohole (A2) zu NCO-Gruppen der Isocyanatoalkyltrialkoxysilane (A1) 0,8:1 bis 1,2:1 beträgt.

6. Bindemittel gemäß einem oder mehreren der Ansprüche 1 bis 5, **dadurch gekennzeichnet, dass** es sich bei dem eingesetzten Silikonharz (B) um ein Silikonharz (B) enthaltend Einheiten der folgenden Formel (I)
R³_{c}(R⁴O)_{d}R⁵ₑSiO_{(4-c-d-e)/2} Formel (I)
handelt, wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (I) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3, bevorzugt 0, 1 oder 2, besonders bevorzugt 0 oder 1, ist und
e 0, 1 oder 2, bevorzugt 0 oder 1, ist,
mit der Maßgabe, dass die Summe aus c + d + e größer 0 und kleiner oder gleich 3 und weiterhin c + e ≥ 1 ist.

7. Bindemittel gemäß einem oder mehreren der Ansprüche 1 bis 6, **dadurch gekennzeichnet, dass** das Silikonharz die allgemeine Formel (II)
RₐSi(OR')_{b}O_{(4-a-b)/2}, Formel (II)
aufweist, wobei
R unabhängig voneinander ausgewählt wird aus der Gruppe der Alkylreste mit 1-8 Kohlenstoffatomen und der Aryl- oder Aralkylreste mit 6-20 Kohlenstoffatomen,
R' unabhängig voneinander ausgewählt wird aus der Gruppe der Alkylreste mit 1-8 Kohlenstoffatomen,
1 ≤ a <2 und
a+b <4.

8. Verfahren zur Herstellung der Bindemittel gemäß einem oder mehreren der Ansprüche 1 bis 7, umfassend die Umsetzung von einem Addukt (A) aus einem Isocyanatoalkylalkoxysilan (A1) und einem Alkohol (A2), mit einem Alkoxysilan-haltigen Alkyl- und/oder Aryl-Silikonharz (B), optional in Gegenwart eines Katalysators (C), einem Alkohol (D) und/oder Wasser.

9. Verfahren gemäß Anspruch 8, **dadurch gekennzeichnet, dass** die Umsetzung von Addukten (A) mit Alkoxysilan-haltigen Alkyl- und/oder Aryl-Silikonharz(B) bei Temperaturen im Bereich von 30 - 150 °C durchgeführt wird.

10. Verfahren gemäß Anspruch 8 oder 9, **dadurch gekennzeichnet, dass** als Katalysatoren (C) solche ausgewählt aus der Gruppe umfassend organische Carbonsäuren mit einem Schmelzpunkt > 60 °C, Tetraalkylammoniumcarboxylate, Metallkomplexe mit Chelatliganden, organische Sn(IV)-, Sn(II)-, Zn-, Bi-Verbindungen, tertiäre Amine, phosphorhaltige, bevorzugt phosphor- und stickstoff-haltige Katalysatoren, organische Sulfonsäuren in unblockierter oder blockierter Form oder Mischungen hieraus eingesetzt werden.

11. Verfahren gemäß einem oder mehreren der Ansprüche 8 bis 10, **dadurch gekennzeichnet, dass** Addukt (A) und das Alkoxysilan-haltige Alkyl- und/oder Aryl- Silikonharz (B) in gleichem Gewichtsverhältnis eingesetzt werden.

12. Verwendung der Bindemittel gemäß einem oder mehreren der Ansprüche 1 bis 7 im Bereich der Lack-, Klebstoff- und Dichtstoffanwendungen.

13. Beschichtungsmittel enthaltend
I) mindestens ein Bindemittel gemäß einem der Ansprüche 1 - 7,
II) optional eine oder mehrere zusätzliche Bindemittelkomponenten,
III) optional einen Katalysator,
IV) optional Hilfs- und Zusatzstoffe,
V) optional organische Lösemittel und
VI) optional Aminosilane.

14. Beschichtungsmittel gemäß Anspruch 13 oder 14, **dadurch gekennzeichnet, dass** als Katalysatoren III) Lewis-Säuren, Metall- oder Übergangsmetallchelate, -Salze oder -Partikel, Sulfonsäuren in freier aber auch neutralisierter oder adduktierter Form, Phosphorsäure oder phosphorige Säuren und deren Derivate, hoch siedende Säuren, quarternäre Ammoniumcarboxylate oder auch Kombinationen der genannten Verbindungen eingesetzt werden.

15. Beschichtungsmittel gemäß einem oder mehreren der Ansprüche 13 bis 15, **dadurch gekennzeichnet, dass** sie zur Beschichtung von Holz, Mitteldichte Holzfaser-Platten, Papier, Kunststoff, Kompositen, Glas, Textilien oder Metall eingesetzt werden.

## Claims

1. Binder based on a reaction product formed from an adduct (A) of an isocyanatoalkylalkoxysilane (A1) and an alcohol (A2) with an alkoxysilane-containing, Q unit-free alkyl- and/or arylsilicone intermediate (B) .

2. Binder according to Claim 1, **characterized in that** the isocyanatoalkylalkoxysilane (A1) is selected from the group comprising isocyanatomethyl-trimethoxysilane, isocyanatomethyltriethoxysilane, isocyanatomethyltriisopropoxysilane, 2-isocyanato-ethyltrimethoxysilane, 2-isocyanatoethyltriethoxy-silane, 2-isocyanatoethyltriisopropoxysilane, 3-isocyanato-n-propyltrimethoxysilane, 3-isocyanato-n-propyltriethoxysilane, 3-isocyanato-n-propyltriiso-propoxysilane, 4-isocyanato-n-butyltrimethoxysilane, 4-isocyanato-n-butyltriethoxysilane and 4-isocyanato-n-butyltriisopropoxysilane.

3. Binder according to Claim 1 or 2, **characterized in that** the alcohol (A2) is a mono- or polyhydric alcohol.

4. Binder according to Claim 3, **characterized in that** the polyhydric alcohol is selected from the group comprising ethylene glycol, propane-1,2-diol, propane-1,3-diol, butane-1,4-diol, pentane-1,5-diol, hexane-1,6-diol, decane-1,10-diol, dodecane-1,12-diol, glycerol, isosorbitol, isomannitol, isoiditol, 2,2,4-trimethylhexane-1,6-diol and 2,4,4-trimethylhexane-1,6-diol, alone or as any desired mixtures of these isomers, 2,2-dimethylbutane-1,3-diol, 2-methylpentane-2,4-diol, 3-methylpentane-2,4-diol, 2,2,4-trimethyl-1-pentane-1,3-diol, 2-ethylhexane-1,3-diol, 2,2-dimethylhexane-1,3-diol, 3-methylpentane-1,5-diol, 2-methylpentane-1,5-diol, 2,2-dimethylpropane-1,3-diol (neopentyl glycol), neopentyl glycol hydroxypivalate, polyethylene glycol, polypropylene glycol, sorbitol, pentaerythritol, 1,1,1-trimethylolpropane, 3(4),8(9)-bis(hydroxymethyl)tricyclo[5.2.1.0^{2,6}]-decane (dicidol) and/or 2,2-bis(4-hydroxycyclohexyl)propane.

5. Binder according to one or more of Claims 1 to 4, **characterized in that** the molar ratio of OH groups in the alcohols (A2) to NCO groups in the isocyanatoalkyltrialkoxysilanes (A1) is 0.8:1 to 1.2:1.

6. Binder according to one or more of Claims 1 to 5, **characterized in that** the silicone resin (B) used is a silicone resin (B) containing units of the following formula (I)
R³_{c}(R⁴O)_{d}R⁵ₑSiO_{(4-c-d-e)/2} formula (I)
where
R³ may be the same or different and is a hydrogen atom, a monovalent, SiC-bonded, optionally substituted aliphatic hydrocarbyl radical or a divalent, optionally substituted, aliphatic hydrocarbyl radical that forms a bridge between two units of the formula (I),
R⁴ may be the same or different and is a hydrogen atom or a monovalent, optionally substituted hydrocarbyl radical,
R⁵ may be the same or different and is a monovalent, SiC-bonded, optionally substituted aromatic hydrocarbyl radical,
c is 0, 1, 2 or 3,
d is 0, 1, 2 or 3, preferably 0, 1 or 2, more preferably 0 or 1, and
e is 0, 1 or 2, preferably 0 or 1,
with the proviso that the sum total of c + d + e is greater than 0 and less than or equal to 3 and furthermore c + e ≥ 1.

7. Binder according to one or more of Claims 1 to 6, **characterized in that** the silicone resin has the general formula (II)
RₐSi(OR'_{b}O_{(4-a-b)/2} formula (II)
where
R is independently selected from the group of the alkyl radicals having 1-8 carbon atoms and the aryl or aralkyl radicals having 6-20 carbon atoms,
R' is independently selected from the group of the alkyl radicals having 1-8 carbon atoms,
1 ≤ a < 2 and
a+b < 4.

8. Process for preparing the binders according to one or more of Claims 1 to 7, comprising the reaction of an adduct (A) formed from an isocyanatoalkylalkoxysilane (A1) and an alcohol (A2) with an alkoxysilane-containing alkyl- and/or arylsilicone intermediate (B), optionally in the presence of a catalyst (C), an alcohol (D) and/or water.

9. Process according to Claim 8, **characterized in that** the reaction of adducts (A) with alkoxysilane-containing alkyl- and/or arylsilicone intermediates (B) is conducted at temperatures in the range of 30-150°C.

10. Process according to Claim 8 or 9, **characterized in that** catalysts (C) used are those selected from the group comprising organic carboxylic acids having a melting point of > 60°C, tetraalkylammonium carboxylates, metal complexes with chelate ligands, organic Sn(IV), Sn(II), Zn and Bi compounds, tertiary amines, phosphorus-containing, preferably phosphorus- and nitrogen-containing catalysts, organic sulphonic acids in an unblocked or blocked form, or mixtures of these.

11. Process according to one or more of Claims 8 to 10, **characterized in that** adduct (A) and the alkoxysilane-containing alkyl- and/or arylsilicone intermediate (B) are used in the same weight ratio.

12. Use of the binders according to one or more of Claims 1 to 7 in the field of paint, adhesive and sealant applications.

13. Coating composition comprising
I) at least one binder according to any of Claims 1-7,
II) optionally one or more additional binder components,
III) optionally a catalyst,
IV) optionally auxiliaries and additives,
V) optionally organic solvents and
VI) optionally aminosilanes.

14. Coating composition according to Claims 13 or 14, **characterized in that** catalysts III) used are Lewis acids, metal or transition metal chelates, salts or particles, sulphonic acids in free form, but also in neutralized or adduct form, phosphoric acid or phosphorous acids and derivatives thereof, high-boiling acids, quaternary ammonium carboxylates or else combinations of the compounds mentioned.

15. Coating composition according to one or more of Claims 13 to 15, **characterized in that** it is used for coating of wood, medium-density wood fibreboards, paper, plastic, composites, glass, textiles or metal.

## Revendications

1. Liant à base d'un produit de réaction d'un adduit (A) d'un isocyanatoalkylalcoxysilane (A1) et d'un alcool (A2) avec une résine d'alkyl- et/ou aryl-silicone contenant un alcoxysilane et exempte d'unité Q (B) .

2. Liant selon la revendication 1, **caractérisé en ce que** l'isocyanatoalkylalcoxysilane (A1) est choisi dans le groupe comprenant l'isocyanatométhyltriméthoxysilane, l'isocyanatométhyltriéthoxysilane, l'isocyanatométhyltri-iso-propoxysilane, le 2-isocyanatoéthyltriméthoxysilane, le 2-isocyanatoéthyltriéthoxysilane, le 2-isocyanatoéthyltri-iso-propoxysilane, le 3-isocyanato-n-propyltriméthoxysilane, le 3-isocyanato-n-propyltriéthoxysilane, le 3-isocyanato-n-propyltri-iso-propoxysilane, le 4-isocyanato-n-butyltriméthoxysilane, le 4-isocyanato-n-butyltriéthoxysilane et le 4-isocyanato-n-butyltri-iso-propoxysilane.

3. Liant selon la revendication 1 ou 2, **caractérisé en ce que** l'alcool (A2) est un alcool mono- ou polyvalent.

4. Liant selon la revendication 3, **caractérisé en ce que** l'alcool polyvalent est choisi dans le groupe qui comprend l'éthylène glycol, le 1,2-propanediol, le 1,3-propanediol, le 1,4-butanediol, le 1,5-pentanediol, le 1,6-hexanediol, le 1,10-décanediol, le 1,12-dodécanediol, la glycérine, l'isosorbitol, l'isomannitol, l'iso-iditol, le 2,2,4-triméthylhexanediol-1,6 et le 2,4,4-triméthylhexanediol-1,6 seuls ou sous la forme de mélanges quelconques de ces isomères, le 2,2-diméthyl-butanediol-1,3, le 2-méthyl-pentanediol-2,4, le 3-méthyl-pentanediol-2,4, le 2,2,4-triméthyl-1-pentanediol-1,3, le 2-éthylhexanediol-1,3, le 2,2-diméthylhexanediol-1,3, le 3-méthylpentanediol-1,5, le 2-méthyl-pentanediol-1,5, le 2,2-diméthylpropanediol-1,3 (néopentylglycol), l'ester néopentylglycolique de l'acide hydroxypivalique, le polyéthylène glycol, le polypropylène glycol, le sorbitol, le pentaérythritol, le 1,1,1-triméthylolpropane, le 3(4),8(9)-bis(hydroxyméthyl)-tricyclo[5.2.1.02,6]décane (dicidol) et/ou le 2,2-bis-(4-hydroxycyclohexyl)propane.

5. Liant selon une ou plusieurs des revendications 1 à 4, **caractérisé en ce que** le rapport molaire entre les groupes OH des alcools (A2) et les groupes NCO des isocyanatoalkyltrialcoxysilanes (A1) est de 0,8:1 à 1,2:1.

6. Liant selon une ou plusieurs des revendications 1 à 5, **caractérisé en ce que** la résine de silicone (B) utilisée consiste en une résine de silicone (B) contenant des unités de la formule (I) suivante :
R³_{c}(R⁴O)_{d}R⁵ₑSiO_{(4-c-d-e)/2} Formule (I)
dans laquelle
les R³ peuvent être identiques ou différents, et signifient un atome d'hydrogène, un radical hydrocarboné aliphatique monovalent, relié à SiC, éventuellement substitué, ou un radical hydrocarboné aliphatique bivalent, éventuellement substitué, qui ponte deux unités de la formule (I),
les R⁴ peuvent être identiques ou différents, et signifient un atome d'hydrogène ou un radical hydrocarboné monovalent, éventuellement substitué,
les R⁵ peuvent être identiques ou différents, et signifient un radical hydrocarboné aromatique monovalent, relié à SiC, éventuellement substitué,
c vaut 0, 1, 2 ou 3,
d vaut 0, 1, 2 ou 3, de préférence 0, 1 ou 2, de manière particulièrement préférée 0 ou 1, et
e vaut 0, 1 ou 2, de préférence 0 ou 1,
à condition que la somme de c + d + e soit supérieure à 0 et inférieure ou égale à 3, et qu'en outre c + e ≥ 1.

7. Liant selon une ou plusieurs des revendications 1 à 6, **caractérisé en ce que** la résine de silicone présente la formule générale (II) :
RₐSi(OR')_{b}O_{(4-a-b)/2} Formule (II)
dans laquelle
les R sont choisis indépendamment les uns des autres dans le groupe constitué par les radicaux alkyle de 1 à 8 atomes de carbone et les radicaux aryle ou aralkyle de 6 à 20 atomes de carbone,
les R' sont choisis indépendamment les uns des autres dans le groupe constitué par les radicaux alkyle de 1 à 8 atomes de carbone,
1 ≤ a < 2, et
a + b < 4.

8. Procédé de fabrication des liants selon une ou plusieurs des revendications 1 à 7, comprenant la mise en réaction d'un adduit (A) d'un isocyanatoalkylalcoxysilane (A1) et d'un alcool (A2), avec une résine d'alkyl- et/ou aryl-silicone contenant un alcoxysilane (B), éventuellement en présence d'un catalyseur (C), d'un alcool (D) et/ou d'eau.

9. Procédé selon la revendication 8, **caractérisé en ce que** la réaction d'adduits (A) avec une résine d'alkyl- et/ou aryl-silicone contenant un alcoxysilane (B) est réalisée à des températures dans la plage allant de 30 à 150 °C.

10. Procédé selon la revendication 8 ou 9, **caractérisé en ce qu'**en tant que catalyseur (C), des catalyseurs choisis dans le groupe comprenant des acides carboxyliques organiques ayant un point de fusion > 60 °C, des carboxylates de tétraalkylammonium, des complexes métalliques avec des ligands chélateurs, des composés organiques de Sn(IV), Sn(II), Zn, Bi, des amines tertiaires, des catalyseurs contenant du phosphore, de préférence contenant du phosphore et de l'azote, des acides sulfoniques organiques sous forme non bloquée ou bloquée ou leurs mélanges sont utilisés.

11. Procédé selon une ou plusieurs des revendications 8 à 10, **caractérisé en ce que** l'adduit (A) et la résine d'alkyl- et/ou aryl-silicone contenant un alcoxysilane (B) sont utilisés en un même rapport en poids.

12. Utilisation des liants selon une ou plusieurs des revendications 1 à 7 dans le domaine des applications de vernis, d'adhésifs et d'agents d'étanchéité.

13. Agents de revêtement contenant :
I) au moins un liant selon l'une quelconque des revendications 1 à 7,
II) éventuellement un ou plusieurs composants liants supplémentaires,
III) éventuellement un catalyseur,
IV) éventuellement des adjuvants et additifs,
V) éventuellement des solvants organiques, et
VI) éventuellement des aminosilanes.

14. Agents de revêtement selon la revendication 13 ou 14, **caractérisés en ce qu'**en tant que catalyseurs III), des acides de Lewis, des chélates, sels ou particules de métaux ou de métaux de transition, des acides sulfoniques sous forme libre, mais également neutralisée ou adduite, de l'acide phosphorique ou des acides phosphoreux et leurs dérivés, des acides de point d'ébullition élevé, des carboxylates d'ammonium quaternaires ou également des combinaisons des composés cités sont utilisés.

15. Agents de revêtement selon une ou plusieurs des revendications 13 à 15, **caractérisé en ce qu'**ils sont utilisés pour le revêtement de bois, de panneaux de fibres de bois de moyenne densité, de papier, de matière plastique, de composites, de verre, de textiles ou de métal.
